# EUROPEAN PATENT APPLICATION

(11) **EP 4 752 008 A1**
(43) Date of publication of application: **03.06.2026**
(21) Application number: 24216663.5
(22) Date of filing: 29.11.2024
(51) Int. Cl.: B60S 1/04, B60S 1/34

(54) **PIVOT ASSEMBLY FOR A VEHICLE WIPER SYSTEM**

(71) Applicant: Valeo Systèmes d'Essuyage, 78322 Le Mesnil Saint Denis (FR)
(72) Inventor: SPIECHA, Antoni, SKAWINA (PL); SWIETEK, Wiktor, SKAWINA (PL)
(74) Representative: Valeo Visibility

(57) **Abstract**

The present invention relates to a pivot assembly 400 for a wiper system 10. The pivot assembly 400 includes a connection assembly 410 to connect a wiper arm 200 to a pivot shaft 440 of the pivot assembly 400. The connection assembly 410 includes a through hole 422 provided on an arm head 420 and a knurled portion 442 formed on the pivot shaft 440 at predetermined location. The knurled portion 442 cooperates with the through hole 422 to form a torque transmitting joint between the arm head 420 and the pivot shaft 440. When an impact force more than a predefined force is applied on the arm head 420, the arm head 420 disengages from the knurled portion 442 to slide over the pivot shaft in downward direction, thereby absorbing the impact energy. The collapsible connection assembly 410 reduces injury to a pedestrian in case of collision.

## Description

### TECHNICAL FIELD OF THE INVENTION

The present invention relates to a windscreen wiper system for a motor vehicle, and more particularly to a collapsible pivot assembly for a vehicle wiper system, for pedestrian collision safety.

### BACKGROUND OF THE INVENTION

A wiper system for an automobile generally consists of one or more wiper assemblies driven by a wiper motor. The wiper assembly may include a wiper arm, one end of which is connected to an output shaft of the wiper motor through linkages and a wiper blade is attached to another end of the wiper arm. The wiper motor drives the wiper arm to swing between the predefined angular positions to wipe off the water and dirt present on the windshield. The wiper arm may include an arm head attached to a rotatable pivot shaft which is driven by the wiper motor, generally through a linkage such as a drive lever. The pivot shaft may be rotatably supported by a pivot housing fixedly mounted on the vehicle.

When assembled on the vehicle, the top portion of the pivot shaft and/or the arm head of the wiper arm, may protrude above the exterior surface of the vehicle, in particular the bonnet/hood. Consequently, in the the event of a collision with a pedestrian, there is a likelihood of the pedestrian being thrown onto the hood and/or windshield of the vehicle. In this scenario, the head and/or torso of the pedestrian may hit the protruding portions of the wiper system. As the pivot shaft, apart from being rotatable in the pivot housing, is fixed with the vehicle structure, the pedestrian may incur severe injury during collision.

The prior art and the conventional wiper system have various disadvantages as described above and there is a need for a wiper assembly for a vehicle wiper system, that can overcome, or at least mitigate, the disadvantages of the conventional wiper system

### SUMMARY OF THE INVENTION

An object of the present invention is to solve the disadvantages described above of known wiper system. In particular, an object of the present invention is to provide a wiper system having pedestrian safety features.

Another object of the present invention is to provide a collapsible pivot assembly to minimize injury to the pedestrian, during collision.

Yet another object of the present invention is to provide an energy absorbing connection between a wiper arm and a pivot shaft of a wiper assembly, to absorb impact forces exerted on the wiper assembly.

In this context, the present invention is directed towards a connection assembly for connecting a wiper arm to a pivot shaft of a pivot assembly. The connection assembly may include a pivot shaft, an arm head, and a locking means. The pivot shaft may include an upper end, a lower end, and a main body extending between the upper end and the lower end. The arm head may be configured to be connected to a first end of a wiper arm. The arm head may be mounted to the pivot shaft. The locking means may be provided on the pivot shaft to restrict movement of the arm head with respect to the pivot shaft, in an upward direction along the longitudinal axis of the pivot shaft. The pivot shaft may include a knurled portion configured to be received in a through hole formed in the arm head. The knurled portion may engage with the through hole to form a torque transmitting joint between the pivot shaft and the arm head. The torque transmitting joint may be configured to break under an impact force or forces acting on the arm head exceeding a predefined threshold.

In normal working, the torque may be transmitted from pivot shaft to the arm head through the torque transmitting joint. When an impact force more than a predefined force is applied on the arm head, the connection assembly allows the arm head to collapse with respect to the pivot shaft by breaking the torque transmitting joint. Thus, the connection assembly improves safety of pedestrians in an event of collision and minimizes injury to the pedestrian due to impact on the pivot assembly of vehicle wiper system.

In a non-limiting embodiment of the present invention, at least the knurled portion of the pivot shaft is cylindrical. Preferably, the main body of the pivot shaft may be cylindrical. However, the portion(s) of the main body of pivot shaft, except the knurled portion, may have a conical shape and/or portions having varied diameter and/or other geometric features such as slots, grooves etc.; or any combination thereof, to accommodate other components as may be required for proper fitment and function of the pivot assembly.

In a non-limiting embodiment of the present invention, the knurled portion may include a plurality of teeth extending parallel to the longitudinal axis of the pivot shaft. The plurality of teeth may be sequentially formed along the circumference of the pivot shaft, such that the teeth engages with the inner surface of the through hole of the arm head to form the torque transmitting joint. Further, the longitudinal orientation of the teeth allows the engagement between the knurled portion and the arm head to break under a predefined force.

In a non-limiting embodiment of the present invention, the knurled portion may include a plurality of teeth extending in a direction inclined at an angle with the longitudinal axis of the pivot shaft. The angle may preferably be up to 2 degrees. The knurled portion may have inclined teeth resembling to the helical gear. The angle of inclination of the teeth may be defined based on a desired impact force under which the pivot assembly needs to collapse.

In a non-limiting embodiment of the present invention, the locking means may include a nut threadedly secured to the pivot shaft near the upper end of the pivot shaft. The pivot shaft may include external threads formed on at least a portion of the pivot shaft protruding upwards from the through hole when the knurled portion of the pivot shaft is received in the through hole. The nut may be fastened to lock the movement of the arm head in upward direction along the longitudinal axis of the pivot shaft, thereby preventing the arm head from separating from the pivot shaft.

In a non-limiting alternate embodiment of the present invention, the locking means may include a screw threadedly secured in a blind hole extending from the upper end of the pivot shaft. The blind hole may be formed longitudinally from the upper end of the pivot shaft. The screw may be fastened in the blind hole such that the arm head may be secured to the pivot shaft to restrict the movement of the arm head with respect to the pivot shaft, in upward direction along the longitudinal axis of the pivot shaft. The screw may further include a collar or a washer.

In a non-limiting embodiment of the present invention, the arm head may include a breakable flange formed in the through hole. The breakable flange may be configured to rest on the upper end of the pivot shaft or on a step formed in the pivot shaft. In case of using the nut as the locking means, the pivot shaft may include a circular step formed above the knurled portion such that the breakable flange may rest on the step and narrow portion of the pivot shaft protrudes above the through hole for fastening the nut. Whereas, in case of using the screw as the locking means, the breakable flange may rest on the upper end of the pivot shaft and the screw may be fastened in the blind hole from above the breakable flange. The breakable flange is adapted to break under a predefined force.

In a non-limiting embodiment of the present invention, the pivot shaft may include a circular groove having tapered lower edge, the circular groove being configured to receive a C-clip to support the arm head. Preferably, the C-clip may support the lower side of the arm head and when a downward force is applied on the arm head, the C-clip may be pushed downwards. The C-clip may be adapted to deform radially outwards when the C-clip is pushed against the tapered lower edge of the circular groove, so the C-clip may come out of the circular groove and allow the arm head to slide downwards on the pivot shaft under application of the force being greater than a predefined force. Therefore, when an impact force exceeding a predefined force is applied on the arm head, the torque transmitting joint breaks and the C-clip deforms allowing the arm head to collapse by absorbing the impact energy.

In a non-limiting embodiment of the present invention, a supporting washer may be provided on the pivot shaft between the C-clip and the arm head. The supporting washer may have a predefined clearance with the pivot shaft and improves the support for the arm head.

In another non-limiting embodiment of the present invention, the knurled portion of the pivot shaft may have a diameter greater than the diameter of the non-knurled portion of the pivot shaft. The diameter of the through hole of the arm head may be accordingly defined such that the desired torque transmitting joint is achieved between the pivot shaft and the arm head. The arm head having a through hole of bigger diameter compared to the diameter of the main body, except the knurled portion, of the pivot shaft, allows the arm head to travel further downwards on the pivot housing as the through hole may accommodate at least some portion of a pivot housing.

In a non-limiting embodiment of the present invention, the knurled portion of the pivot shaft may be formed as a separate component secured to the main body of the pivot shaft. The said component may be secured to the main body of the pivot shaft by any known means.

In a non-limiting embodiment of the present invention, a retaining washer along with a supporting washer, may be provided on the pivot shaft to support the arm head. The retaining washer may be provided on the pivot shaft near the knurled portion, on opposite side of the upper end. The supporting washer may be provided between the retaining washer and the knurled portion to support the lower side of the arm head from, to restrict the longitudinally downward movement of the arm head with respect to the pivot shaft. The retaining washer may engage to the outer surface of the pivot shaft and may be adapted to disengage from the pivot shaft under application of a predefined force.

The present invention also relates to a pivot assembly for a motor vehicle. The pivot assembly may include a pivot housing fixedly mounted on a vehicle structure. The pivot housing may include a through bore to rotatably support at least a portion of the pivot shaft of the connection assembly of above embodiments.

The present invention also relates to a wiper assembly for a motor vehicle. The wiper assembly may include a wiper blade attached to a second end of the wiper arm. The wiper blade may be attached to the wiper arm by a known means such as but not limited to connector and/or adapter etc. The wiper assembly may further include the pivot assembly according to the above embodiment. The pivot assembly may be configured to connect the first end of the wiper arm to a drive lever. The drive lever may be fixedly mounted on the pivot shaft near the lower end. The wiper assembly may include other known components which may be required for proper functioning of the wiper assembly.

The present invention also relates to a wiper system for a motor vehicle. The wiper system may include at least one wiper assembly according to above embodiment. The wiper system may further include a wiper motor configured to drive the drive lever through linkages. The wiper system may be provided for cleaning a vehicle windshield or window etc. Preferably, the wiper system may include two wiper assemblies driven by the wiper motor through suitable linkages, to wipe out the water and dirt present on the windshield.

### BRIEF DESCRIPTION OF DRAWINGS

The present invention is expounded in detail below with the aid of the presented drawings. Items shown in the drawings are not to scale and are simplified to increase clarity of disclosure. In the drawings:
Figure 1 illustrates a schematic perspective view of a wiper system for a motor vehicle, according to an embodiment of the present invention;
Figure 2 illustrates a schematic perspective view of a wiper assembly of the wiper system, according to an embodiment of the present invention;
Figure 3 illustrates a schematic perspective view of a pivot assembly of the wiper assembly, according to an embodiment of the present invention;
Figure 4A illustrates a schematic perspective view of a connection assembly of the pivot assembly, according to an embodiment of the present invention;
Figure 4B illustrates an exploded view of the connection assembly of Figure 4A, according to an embodiment of the present invention;
Figures 5A and 5B illustrate a schematic perspective view and an exploded view, respectively, of a connection assembly, according to an alternate embodiment of the present invention;
Figure 5C illustrates a sectional view taken along longitudinal axis of the pivot shaft of the connection assembly of Figure 5A, according to an embodiment of the present invention;
Figure 6A illustrates a sectional view taken along longitudinal axis of the pivot shaft of a connection assembly, according to another alternate embodiment of the present invention;
Figure 6B illustrates a sectional view taken along longitudinal axis of the pivot shaft of a connection assembly, according to another alternate embodiment of the present invention;
Figures 7A, 7B, 7C and 7D illustrate sectional views taken along longitudinal axis of the pivot shaft of a connection assembly, according to different alternate embodiments of the present invention;
Figures 8A, 8B, 8C and 8D illustrate sectional views taken along longitudinal axis of the pivot shaft of a connection assembly, according to different alternate embodiments of the present invention;
Figures 9A and 9B illustrate an exploded view and a longitudinal sectional view, respectively, of a connection assembly, according to another alternate embodiment of the present invention;
Figures 10 illustrates an exploded view of a connection assembly, according to yet another alternate embodiment of the present invention; and
Figures 11A and 11B illustrates schematic views of the knurled portion, according to different aspects of the present invention.

### DETAILED DESCRIPTION OF THE INVENTION

The characteristics, variants and different modes of realization of the invention may be associated with each other in various combinations, in so far as they are not incompatible or exclusive with each other. In particular, variants of the invention comprising only a selection of features subsequently described in from the other features described may be imagined, if this selection of features is enough to confer a technical advantage and/or to differentiate the invention from prior art.

The following embodiments are examples. Although the description refers to one or more embodiments, this does not necessarily mean that each reference is to the same embodiment, or that the features apply only to one embodiment. Simple features of different embodiments may also be combined and/or interchanged to provide further embodiments.

In the present description, certain elements or parameters may be indexed, for example first element or second element as well as first parameter and second parameter or first criterion and second criterion, etc. In this case, it is a simple indexing operation to differentiate and name elements or parameters or criteria which are close, but not identical. In this case, simple indexing is used to differentiate and name elements or parameters or criteria which are close, but not identical. This indexing does not imply that one element, parameter or criterion has priority over another, and such names can easily be interchanged without going beyond the scope of this description. Nor does this indexing imply an order in time, for example to assess a particular criterion.

In addition, the designations 'lower' and 'upper' with respect to the elements of the pivot assembly are understood with respect to the orientation of the pivot assembly when the wiper assembly is mounted on the vehicle, a lower end/side of such elements corresponding to the end/side disposed towards road/ground, while an upper end/side corresponds to the end/side disposed away from the road/ground. Further, the terminologies 'upward' and 'downward' are also understood with respect to the orientation of the pivot assembly when the wiper assembly is mounted on the vehicle.

In addition, the phrase "torque transmitting joint" may be understood as an engagement or connection or attachment between two components such that torque may be transferred from one component to the other component through the joint. Further, "torque transmitting joint" may also be understood as an engagement or connection or attachment between two components such that rotational motion of one component may be transferred to the other component.

It is to be understood that as a large number of the components in a vehicle wiper system are conventional, such are not shown in detail in order that the features of the present invention may be more clearly identified.

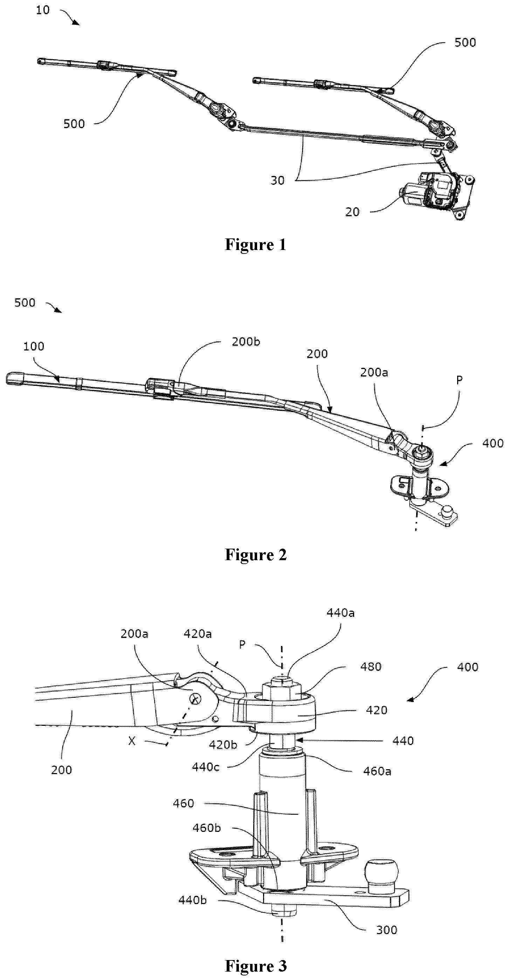

Figure 1 illustrates a wiper system 10 for a motor vehicle. The wiper system 10 may include a pair of wiper assemblies 500, such as a pair of right and left wiper assemblies 500 provided for cleaning a windshield (not shown) of the motor vehicle. The wiper assemblies 500 may be driven by a wiper motor 20 through suitable linkages 30, to wipe off the water and/or dirt present on the windshield.

As shown in Figure 2, the wiper assembly 500 may include a wiper arm 200 having a first end 200a and a second end 200b. The second end 200b of the wiper arm 200 may be attached to a wiper blade 100. The wiper blade 100 may include at least one wiper strip (rubber) intended to be in contact with the surface of the windshield to be cleaned. The wiper blade 100 may be secured to the second end 200b of the wiper arm 200 by a suitable attaching means such as but not limited to a connector and/or an adapter etc. The first end 200a of the wiper arm 200 may be connected to a pivot assembly 400 such that the wiper arm 200 may swing about a pivot axis P of the pivot assembly 400.

Figure 3 illustrates the wiper arm 200 connected to the pivot assembly 400. The pivot assembly 400 may include an arm head 420 connected to the first end 200a of the wiper arm 200 such that the wiper arm 200 may be rotated between predefined angular positions about the axis X. The arm head 420 may have an upper side 420a and a lower side 420b opposite to the upper side 420a. The pivot assembly 400 may further include a pivot shaft 440 rotatably supported in a pivot housing 460. The pivot housing 460 may be fixedly mounted on vehicle structure (not shown). The pivot housing 460 may have an upper end 460a and a lower end 460b opposite to the upper end 460a. The pivot housing 460 may include a through bore (not seen in the Figure) extending from the upper end 460a to the lower end 460b. Preferably, the through bore may have a circular cross-section. The pivot shaft 440 may have an upper end 440a, a lower end 440b opposite to the upper end 440a, and a cylindrical main body 440c extending between the upper end 440a and the lower end 440b. Preferably, the pivot shaft 440 may be provided in the form of a tubular member, which can be solid or hollow. The pivot shaft 440 may be inserted in the through bore of the pivot housing 460 such that at least a portion of the pivot shaft 440 near the upper end 440a, extends outside of the through bore of the pivot housing 460. Further, at least a portion of the pivot shaft 440 near the lower end 440b, may extend outside of the through bore of the pivot housing 460. A predefined clearance may be provided between the pivot shaft 440 and the through bore of the pivot housing 460.

Additionally, one or more bushings (not illustrated) may be disposed between the pivot shaft 440 and the through bore of the pivot housing 460. Further, a C-clip may be disposed on the upper end 460a of the pivot housing 460 and the C-clip may engage a slot formed on the pivot shaft 440 to longitudinally restrain the pivot shaft 440 relative to the pivot housing 460. A drive lever 300 may be secured to the pivot shaft 440 near the lower end 440b of the pivot shaft 440 and at the lower end 460b of the pivot housing 460, such that the drive lever 300 may be driven by the wiper motor 20 to rotate the pivot shaft 440 in the through bore of the pivot housing 460. The drive lever 300 may be longitudinally and rotatably fixed to the pivot shaft 440 by a press-fit joint and a clip. It is to be understood that any other known securing means may be used to secure the drive lever 300 to the pivot shaft 440.

The arm head 420 may be secured to the pivot shaft 440, more specifically to the exposed portion of the pivot shaft 440 near the upper end 440a, such that rotation of the arm head 420 is restricted with respect to the pivot shaft 440. Further, a locking means 480 may be provided on the pivot shaft 440 towards upper side 420a of the arm head 420. The locking means 480 restricts the movement of the arm head 420 with respect to the pivot shaft 440, in upward direction along the pivot axis P i.e. along the longitudinal axis of the pivot shaft 440. It is to be noted that the longitudinal axis of the pivot shaft 440 coincides with the pivot axis P of the pivot assembly 400, hence these terminologies may be interchangeably used and denoted by reference P.

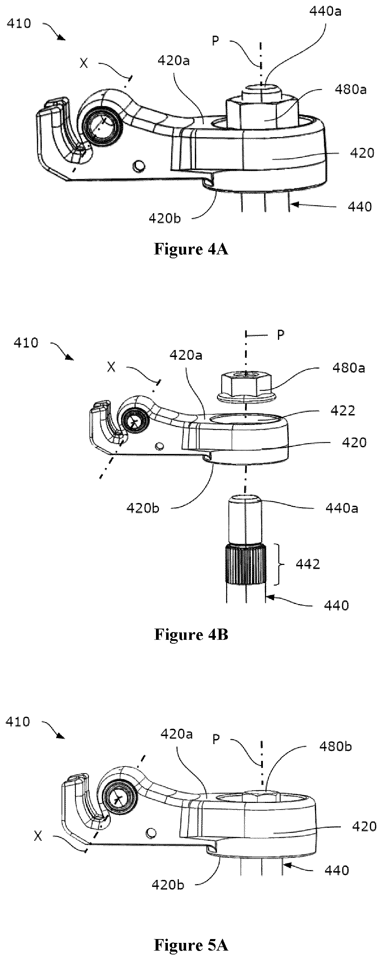

Figures 4A and 4B illustrate a connection assembly 410, according to one embodiment of the present invention. The connection assembly 410 may be formed by the arm head 420, the pivot shaft 440 and the locking means 480. The arm head 420 may be coupled to the wiper arm 200 by a known means. The arm head 420 may further include a through hole 422 extending from the upper side 420a of the arm head 420 to the lower side 420b of the arm head 420. Preferably, the through hole 422 has a cylindrical shape or has a circular cross-section with center of circle being positioned on the pivot axis P. As shown in Figure 4B, the pivot shaft 440 may include a knurled portion 442 formed on the main body 440c, at a predefined distance from the upper end 440a of the pivot shaft 440.

The knurled portion 442 may include a plurality of teeth adapted to engage with an inner surface of the through hole 422 of the arm head 420. The engagement between the teeth of the knurled portion 442 and the inner surface of the through hole 422 may define a torque transmitting joint between the pivot shaft 440 and the arm head 420, to transmit the rotational motion of the pivot shaft 440 to the arm head 420.

The locking means 480 may include a nut 480a threadedly secured to a threaded portion of the pivot shaft 440 near the upper end 440a. More specifically, the pivot shaft 440 may be received in the through hole 422 of the arm head 420 such that the knurled portion 442 engages with the inner surface of the through hole 422 and the nut 480a may be secured on the portion of the pivot shaft 440 extending upwards from the upper side 420a of the arm head 420. The nut 480a may be adapted to restrict upward movement of the arm head 420 with respect to the pivot shaft 440, in a direction along the longitudinal axis P of the pivot shaft 440.

Additionally, the arm head 420 may include raised portions (not shown) provided on the upper side 420a of the arm head 420, surrounding the through hole 422 such that the upper end 440a of the pivot shaft and the nut 480a are not exposed outside of the arm head 420.

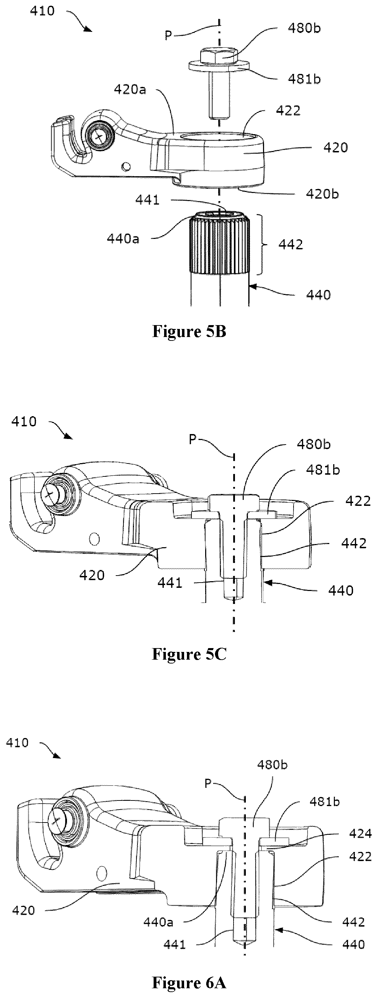

Figures 5A, 5B and 5C illustrate a connection assembly 410, according to an alternate embodiment of the present invention. The connection assembly 410 may include the arm head 420, which is structurally similar to the arm head 420 of the previous embodiment. The knurled portion 442 of the pivot shaft 440 may be formed near the upper end 440a of the pivot shaft 440. The knurled portion 442 and engagement of the knurled portion with the inner surface of the through hole 422 of the arm head 420, of the present embodiment may be similar to the previous embodiment.

However, in the embodiment of Figs. 5A-5C, a screw 480b may be provided as the locking means 480, instead of the nut 480a of the previous embodiment. Moreover, a blind hole 441 having internal threads may be formed extending from the upper end 440a of the pivot shaft 440 to a predefined distance along the longitudinal axis P of the pivot shaft 440. The screw 480b may have an integrated collar or a washer 481b provided to secure the arm head 420 with the pivot shaft 440 by fastening the screw 480b in the blind hole 441 of the pivot shaft 440, as shown in sectional view in Figure 5C.

For the connection assemblies 410 disclosed in previous embodiments, the arm head 420 may collapse with respect to the pivot shaft 440 when an impact force greater than a predefined force is applied on the arm head 420 directly or indirectly. More specifically, the engagement between the knurled portion 442 of the pivot shaft 440 and the inner surface of the through hole 422 of the arm head 420, i.e. the torque transmitting joint, may be adapted to break under a predefined force acting along the longitudinal axis P of the pivot shaft 440, thereby allowing the arm head 420 to slide towards the pivot housing 460, thereby absorbing the impact energy.

Figure 6A illustrates a connection assembly 410, according to another alternate embodiment of the present invention. The connection assembly 410 may include the pivot shaft 440 having the knurled portion 442 formed near the upper end 440a of the pivot shaft 440. Further, the blind hole 441 having internal threads may be longitudinally formed extending from the upper end 440a to a predefined distance of the pivot shaft 440. The connection assembly 410 may further include the arm head 420 having the through hole 422 extending from the upper side 420a of the arm head 420 to the lower side 420b of the arm head 420. Preferably, the through hole 422 may have a cylindrical shape or may have a circular cross-section with center of circle being positioned on the pivot axis P. Moreover, the arm head 420 may further include a breakable flange 424 formed in the through hole 422, preferably towards the upper side 420a of the arm head 420. The knurled portion 442 of the pivot shaft 440 may be inserted in the through hole 422 of the arm head 420 such that the breakable flange 424 rests on the upper end 440a of the pivot shaft 440. The screw 480b with the collar or the washer 481b may be fastened in the blind hole 441 to secure the arm head 420 with the pivot shaft 440. The breakable flange 424 of the arm head 420 is configured to break under application of a predefined impact force. The torque transmitting joint between the knurled portion 442 of pivot shaft 440 and the inner surface of the through hole 422 of the arm head, and the breakable flange 424 of the arm head 420 may be adapted to break when an impact force greater than a predefined force is applied on the arm head 420, to allow the arm head 420 to slide over the pivot shaft 440, and thereby absorb the impact energy.

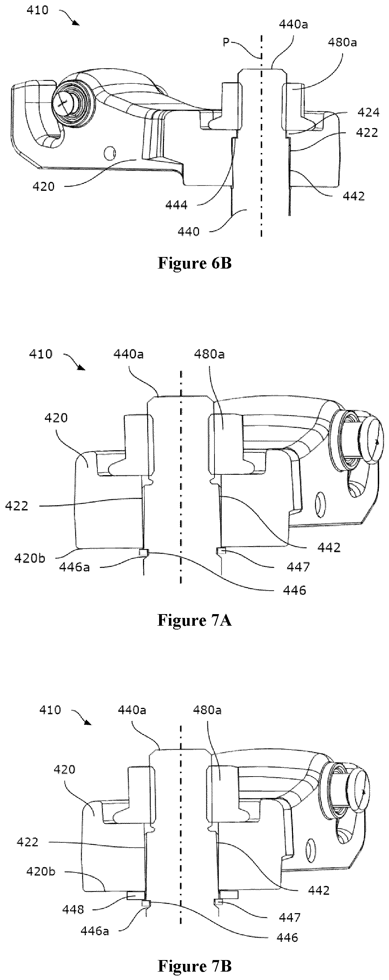

Figure 6B illustrates a connection assembly 410, according to yet another alternate embodiment of the present invention. The connection assembly 410 may include the pivot shaft 440 having the knurling portion 442 formed at a predefined distance from the upper end 440a of the pivot shaft 440. Further, the pivot shaft 440 may include a step 444 formed near the knurled portion 442 such that the portion of the pivot shaft 440 between the knurled portion 442 and the upper end 440a, has a diameter less than the diameter of the remaining portion of the pivot shaft 440.

The connection assembly 410 may further include the arm head 420 arm head 420, which is structurally similar to the arm head 420 of the previous embodiment, i.e. the arm head 420 having the breakable flange 424 formed in the through hole 422. The pivot shaft 440 may be inserted in the through hole 422 of the arm head 420 such that the knurled portion 442 of the pivot shaft 440 engages with the inner surface of the through hole 422 of the arm head 420, and the breakable flange 424 rests on the step 444 of the pivot shaft 440. The arm head 420 may be secured to the pivot shaft 440 by fastening the nut 480a on the portion of the pivot shaft 440 extending outwards from the through hole 422 of the arm head 420. The breakable flange 424 of the arm head 420 may be adapted to break under application of a predefined impact force.

Therefore, the torque transmitting joint between the knurled portion 442 of pivot shaft 440 and the inner surface of the through hole 422 of the arm head 420, and the breakable flange 424 of the arm head 420, may be adapted to break when an impact force greater than a predefined force is applied on the arm head 420, to allow the arm head 420 to slide over the pivot shaft 440 by absorbing the impact energy.

Figure 7A illustrates a connection assembly 410 according to yet another alternate embodiment of the present invention. The connection assembly 410 may include the arm head 420 having the through hole 422 extending from the upper side 420a of the arm head 420 to the lower side 420b of the arm head 420. Further, the pivot shaft 440 may include the knurled portion 442 formed at a predefined distance from the upper end 440a of the pivot shaft 440. The pivot shaft 440 may further include a circular groove 446 formed adjacent to the knurled portion 442, on opposite side of the upper end 440a of the pivot shaft 440. The circular groove 446 may have a lower edge 446a tapered downwards or tapered towards side opposite to the upper end 440a of the pivot shaft 440.

The pivot shaft 440 may be inserted in the through hole 422 of the arm head 420 such that the knurled portion 442 engages with the inner surface of the through hole 422 to form the torque transmitting joint. A deformable C-clip 447 may be received in the circular groove 446 such that the C-clip 447 supports the lower side 420b of the arm head 420. The C-clip 447 may be adapted to deform against the tapered lower edge 446a of the circular groove 446 when a force greater than a predefined force is applied on the C-clip 447 along longitudinal axis P of the pivot shaft 440.

Thus, when an impact force greater than a predefined threshold force is applied on the arm head 420, the C-clip 447 may be moved downwards and may be deformed radially outwards due to the tapered lower edge 446a of the circular groove 446, thereby coming out of the circular groove 446 to allow the arm head 420 to slide over the pivot shaft 440 towards the pivot housing 460 or away from the upper end 440a of the pivot shaft 440. The torque transmitting joint and the C-clip 447 may be adapted to disengage when an impact force more than a predefined force is applied on the arm head 420, thereby absorbing the impact energy. Additionally, a supporting washer 448 may be provided between the C-clip 447 and the lower side 420b of the arm head 420, as shown in Figure 7B, to improve support for the arm head 420.

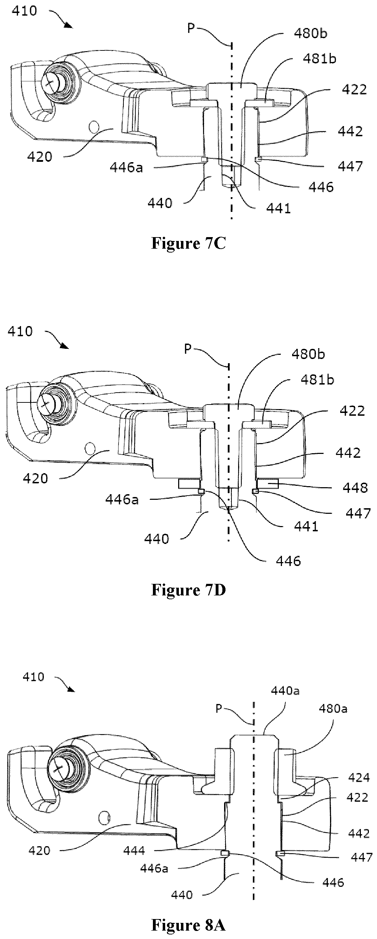

Figure 7C illustrates a connection assembly 410 according to yet another alternate embodiment of the present invention. The connection assembly 410 may include the arm head 420 having the through hole 422 extending from the upper side 420a of the arm head to the lower side 420b of the arm head 420. Further, the pivot shaft 440 may include the knurled portion 442 formed near the upper end 440a of the pivot shaft 440.

Moreover, the blind hole 441 may be longitudinally formed extending from the upper end 440a to a predefined distance in the pivot shaft 440. Similar to the previous embodiment, the pivot shaft 440 may include the circular groove 446 having the tapered lower edge 446a, formed adjacent to the knurled portion 442, on opposite side of the upper end 440a of the pivot shaft 440. The pivot shaft 440 may be inserted in the through hole 422 of the arm head 420 such that the knurled portion 442 engages with the inner surface of the through hole 422 to form the torque transmitting joint. The screw 480b with the collar or the washer 481b may be fastened in the threaded blind hole 441 from upper side 420a of the arm head 420.

Further, the deformable C-clip 447 may be received in the circular groove 446 such that the C-clip 447 supports the lower side 420b of the arm head 420. The C-clip 447 may be adapted to deform against the tapered lower edge 446a of the circular groove 446 when a force greater than a predefined force is applied on the C-clip 446 along longitudinally downward direction.

Thus, when an impact force greater than a predefined force is applied on the arm head 420, the C-clip 447 may be moved downwards and may be deformed radially outwards due to the tapered lower edge 446a of the circular groove 446, thereby coming out of the circular groove 446 to allow the arm head 420 to slide towards the pivot housing 460 or away from the upper end 440a of the pivot shaft 440. The torque transmitting joint and the C-clip 447 may be adapted to disengage when an impact force more than a predefined force is applied on the arm head 420, thereby absorbing the impact energy. Additionally, the supporting washer 448 may be provided between the C-clip 447 and the lower side 420b of the arm head 420, as shown in Figure 7D, to improve support for the arm head 420.

Figure 8A illustrates a connection assembly 410 according to yet another alternate embodiment of the present invention. The connection assembly 410 may include the pivot shaft 440 having the knurled portion 442 formed at a predefined distance from the upper end 440a of the pivot shaft 440. Further, the pivot shaft 440 may include the step 444 formed near the knurled portion 442 such that the portion of the pivot shaft 440 between the knurled portion 442 and the upper end 440a, has a diameter less than the diameter of the remaining portion of the pivot shaft 440.

Moreover, the arm head 420 may further include the breakable flange 424 formed in the through hole 422, preferably towards the upper side 420a of the arm head 420. The pivot shaft 440 may be inserted in the through hole 422 of the arm head 420 such that the knurled portion 442 of the pivot shaft 440 engages with the inner surface of the through hole 422 of the arm head 420 and the breakable flange 424 rests on the step 444 of the pivot shaft 440. The arm head 420 may be secured to the pivot shaft 440 by fastening the nut 480a on the portion of the pivot shaft 440 extending outwards from the through hole 422 of the arm head 420. The breakable flange 424 of the arm head 420 may be adapted to break under application of a predefined force along longitudinal axis P of the pivot shaft 440. The pivot shaft 440 may further include the circular groove 446 having the tapered lower edge 446a, formed adjacent to the knurled portion 442, on opposite side of the upper end 440a of the pivot shaft 440. The pivot shaft 440 may be inserted in the through hole 422 of the arm head 420 such that the knurled portion 442 engages with the inner surface of the through hole 422 to form the torque transmitting joint. The deformable C-clip 447 may be received in the circular groove 446 such that the C-clip 447 supports the lower side 420b of the arm head 420. The C-clip 447 may be adapted to deform against the tapered lower edge 446a of the circular groove 446 when a force greater than a predefined force is applied on the C-clip 447 along longitudinally downward direction.

Thus, when an impact force greater than a predefined threshold force is applied on the arm head 420, the C-clip 447 may be moved downwards and may be deformed radially outwards due to the tapered lower edge 446a of the circular groove 446, thereby coming out of the circular groove 446 to allow the arm head 420 to slide towards the pivot housing 460 or away from the upper end 440a of the pivot shaft 440.

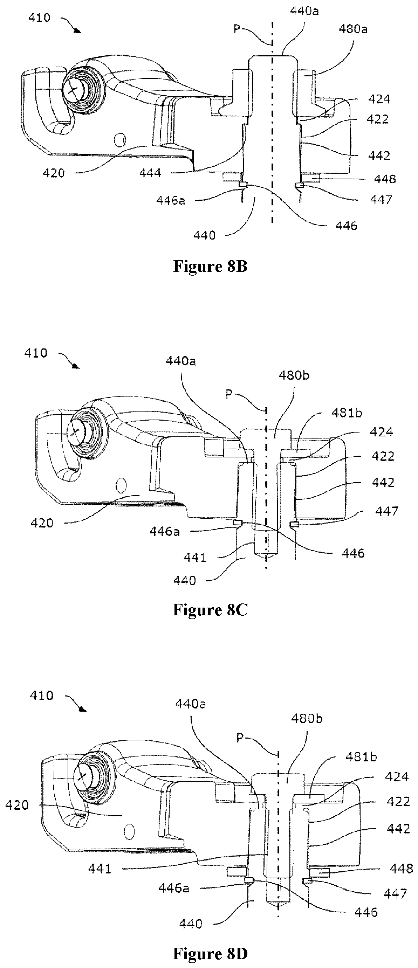

Therefore, the torque transmitting joint between the knurled portion 442 of pivot shaft 440 and the inner surface of the through hole 422 of the arm head 420, the breakable flange 424 of the arm head 420, and the C-clip 447 may be adapted such that when an impact force greater than a predefined threshold force is applied on the arm head 420, the breakable flange 424 and the torque transmitting joint breaks, and the C-clip 447 deforms to allow the arm head 420 to slide over the pivot shaft 440, thereby absorbing the impact energy. Additionally, the supporting washer 448 may be provided between the C-clip 447 and the lower side 420b of the arm head 420, as shown in Figure 8B, to improve support for the arm head 420.

Figure 8C illustrates a connection assembly 410, according to yet another alternate embodiment of the present invention. The connection assembly 410 may include the pivot shaft 440 having the knurled portion 442 formed near the upper end 440a of the pivot shaft 440. Further, the blind hole 441 may be longitudinally formed extending from the upper end 440a to a predefined distance of the pivot shaft 440.

Moreover, the arm head 420 may be structurally similar to the arm head 420 of previous embodiments, e.g. the arm head 420 having the breakable flange 424 formed in the through hole 422. The knurled portion 442 of the pivot shaft 440 may be inserted in the through hole 422 of the arm head 420 such that the breakable flange 424 rests on the upper end 440a of the pivot shaft 440. The screw 480b with the collar or the washer 481b may secure the arm head 420 with the pivot shaft 440. The breakable flange 424 of the arm head 420 is configured to break under application of a predefined impact force.The pivot shaft 440 may further include the circular groove 446 having the tapered lower edge 446a, formed adjacent to the knurled portion 442, on opposite side of the upper end 440a of the pivot shaft 440.

The pivot shaft 440 may be inserted in the through hole 422 of the arm head 420 such that the knurled portion 442 engages with the inner surface of the through hole 422 to form the torque transmitting joint. The screw 480b with the collar or the washer 481b may be fastened in the threaded blind hole 441 from upper side 420a of the arm head 420. A deformable C-clip 447 may be received in the circular groove 446 such that the C-clip 447 supports the lower side 420b of the arm head 420. The C-clip 447 may be adapted to deform against the tapered lower edge 446a of the circular groove 446 when a force greater than a predefined force is applied on the C-clip 447 along longitudinally downward direction.

Thus, when an impact force greater than a predefined force is applied on the arm head 420, the C-clip 447 may be moved downwards and may deform radially outwards due to the tapered lower edge 446a of the circular groove 446, thereby coming out of the circular groove 446 to allow the arm head 420 to slide towards the pivot housing 460 or away from the upper end of the pivot shaft 440.

Therefore, the torque transmitting joint between the knurled portion 442 of pivot shaft 440 and the inner surface of the through hole 422 of the arm head 420, the breakable flange 424 of the arm head 420, and the C-clip 447 may be adapted such that when an impact force greater than a predefined force is applied on the arm head 420, the breakable flange 424 and the torque transmitting joint breaks, and the C-clip 447 deforms, to allow the arm head 420 to slide over the pivot shaft 440, thereby absorbing the impact energy. Additionally, a supporting washer 448 may be provided between the C-clip 447 and the lower side 420b of the arm head 420, as shown in Figure 8D, to improve support for the arm head 420.

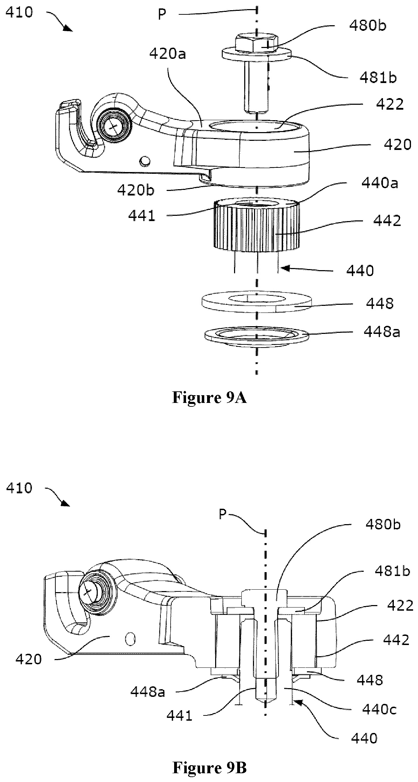

Figures 9A and 9B illustrate a connection assembly 410, according to yet another alternate embodiment of the present invention. The connection assembly 410 may include the arm head 420 adapted to be coupled to the wiper arm 200 by a known means. The arm head 420 may include the through hole 422 extending from the upper side 420a of the arm head 420 to the lower side 420b of the arm head 420. Preferably, the through hole 422 has a cylindrical shape or has a circular cross-section with center of circle being positioned on the pivot axis P.

As shown in Figure 9A, the pivot shaft 440 may include the knurled portion 442 formed near upper end 440a on the pivot shaft 440. The knurled portion 442 may include a plurality of teeth adapted to engage with the inner surface of the through hole 422 of the arm head 420. The engagement between the teeth of the knurled portion 442 and the inner surface of the through hole 422 defines the torque transmitting joint between the pivot shaft 440 and the arm head 420, to transmit the rotational motion of the pivot shaft 440 to the arm head 420. The diameter of the knurled portion 442 may be greater than the diameter of the main body 440c of the pivot shaft 440. The diameter of the through hole 422 of the arm head 420 may be adapted accordingly to achieve desired torque transmitting joint between the pivot shaft 440 and the arm head 420. The screw 480 with the collar or the washer 481b may be provided to secure the arm head 420 to the pivot shaft 440.

Moreover, the pivot shaft 440 may include the blind hole 441 having internal threads, extending longitudinally to a predefined distance from the upper end 440a of the pivot shaft 440. More specifically, the screw 480b may be fastened in the blind hole 441 of the pivot shaft 440 from upper side 420a of the arm head 420, to restrict upward movement of the arm head 420 with respect to the pivot shaft 440, along the longitudinal axis P of the pivot shaft 440. The connection assembly 410 may further include a retaining washer 448a provided on the pivot shaft 440 near the knurled portion 442, on opposite side of the upper end 440a. The retaining washer 448a may support the arm head 420 from the lower side 420b to restrict the longitudinally downward movement of the arm head 420 with respect to the pivot shaft 440. The retaining washer 448a may engage to the outer surface of the pivot shaft 440 and may be adapted to disengage from the pivot shaft 440 under application of a predefined force. The retaining washer 448a may support the arm head 420 through the supporting washer 448, as shown in Figure 9B.

Since the through hole 422 of this embodiment has bigger diameter compared to the diameter of the through hole 422 of previous embodiments, when the knurled portion 442 disengages from the through hole 422 under the application of a predefined impact force, the arm head 420 may travel more downward distance on the pivot shaft 440, as the bigger through hole 422 allows the arm head 420 to slide over at least some portion, especially portion near the upper end 460a of the pivot housing 460. It is to be noted that the knurled portion 442 may be provided as a separate component as shown in figure 9B, that may be secured to the main body 440c of the pivot shaft 440 by a suitable securing means. Alternatively, the knurled portion 442 of present embodiment may be integrally formed with the main body 440c of the pivot shaft 440.

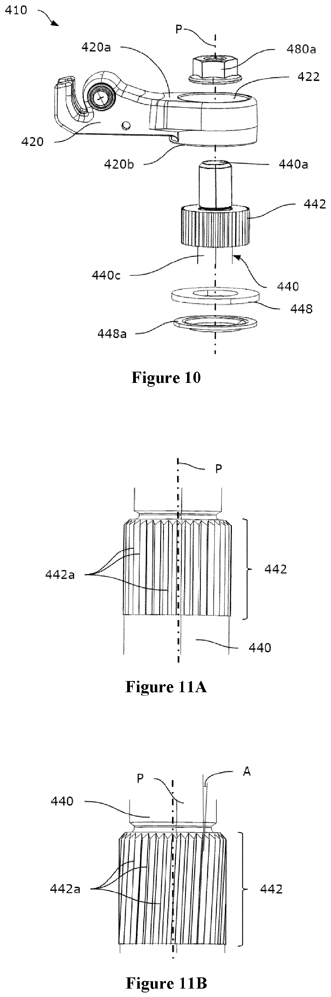

Figure 10 illustrates a connection assembly 410, according to yet another alternate embodiment of the present invention. The connection assembly 410 may include the arm head 420 structurally similar to the arm head 420 of previous embodiment i.e. embodiment corresponding to Figures 9A and 9B. The Pivot shaft 440 of present embodiment may include the knurled portion 442 provided on the main body 440c, at a predefined distance from the upper end 440a of the pivot shaft 440. The knurled portion 442 may include plurality of teeth adapted to engage with the inner surface of the through hole 422 of the arm head 420. The engagement between the teeth of the knurled portion 442 and the inner surface of the through hole 422 defines the torque transmitting joint, to transmit the rotational motion of the pivot shaft 440 to the arm head 420. The diameter of the knurled portion 442 may be more than the diameter of the main body 440c of the pivot shaft 440. The diameter of the through hole 422 of the arm head 420 may be adapted accordingly to achieve desired torque transmitting joint between the pivot shaft 440 and the arm head 420.

The connection assembly 410 may include the nut 480a threadedly secured to the portion of the pivot shaft 440 near the upper end 440a. More specifically, the pivot shaft 440 may be received in the through hole 422 of the arm head 420 such that the knurled portion 442 engages with the inner surface of the through hole 422 and the nut 480a may be secured on the portion of the pivot shaft 440 extending upwards from the upper side 420a of the arm head 420. The nut 480a may be adapted to restrict upward movement of the arm head 420 with respect to the pivot shaft 440, in a direction along the longitudinal axis P of the pivot shaft 440. The connection assembly 410 may further include the retaining washer 448a provided on the pivot shaft 440 near the knurled portion 442, on opposite side of the upper end 440a. The retaining washer 448a may support the arm head 420 from the lower side 420b to restrict the longitudinally downward movement of the arm head 420 with respect to the pivot shaft 440. The retaining washer 448a may engage to the outer surface of the pivot shaft 440 and may be adapted to disengage from the pivot shaft 440 under application of a predefined force. The retaining washer 448a may support the arm head 420 through the supporting washer 448.

Since the through hole 422 of this embodiment has a greater diameter than that of the main body 440c of the pivot shaft 440, when the knurled portion 442 disengages from the through hole 422 under the application of the impact force, the arm head 420 may travel a further downward distance on the pivot shaft 440, as the bigger through hole 422 may allow the arm head 420 to slide over at least a portion of the pivot housing 460, especially portion near the upper end 460a of the pivot housing 460. It is to be noted that the knurled portion 442 may be a separate component that may be secured to the main body 440c of the pivot shaft 440. Alternatively, the knurled portion 442 of present embodiment may be integrally formed with the main body 440c of the pivot shaft 440.

Figure 11A illustrates the knurled portion 442 of all the previous embodiments according to one aspect of the present invention. The knurled portion 442 may include a plurality of teeth 442a formed successively along the circumference of the pivot shaft 440. The plurality of teeth 442a may extend in a direction parallel to the longitudinal axis P of the pivot shaft 440. The teeth 442a of the knurled portion 442 are adapted to engage with the inner surface of the through hole 422 of the arm head 420 to rotationally fix the arm head 420 to the pivot shaft 440. The engagement of the teeth 442a with the inner surface of the through hole 422 forms the torque transmitting joint between the pivot shaft 440 and the arm head 420 so that the pivot shaft 440 may be rotated to swing the arm head 420 about the pivot axis P.

Further, the knurled portion 442 having teeth 442a oriented parallel to the longitudinal axis P, allows the arm head 420 to slide on the pivot shaft 440 by breaking the torque transmitting j oint, under the application of impact force greater than a predefined force applied on the arm head 420. It is to be noted that the knurled portion 442 of this aspect may be provided on the pivot shaft 440 of all embodiments of the connection assemblies 410 described above.

Figure 11B illustrates the knurled portion 442 according to another aspect of the present invention. The knurled portion 442 may include a plurality of teeth 442a formed successively on the circumference of the pivot shaft 440. The plurality of teeth 442a may extend in a direction making a predefined angle A with respect to the longitudinal axis P of the pivot shaft 440. The angle of inclination A may be kept smaller, preferably in the range of up to 2 degrees, more preferably in the range of 1 to 2 degrees. The teeth 442a of the knurled portion 442 may be adapted to engage with the inner surface of the through hole 422 of the arm head 420 to form the torque transmitting joint between the pivot shaft 440 and the arm head 420 so that the pivot shaft 440 may be rotated to swing the arm head 420 about the pivot axis P.

Further, the knurled portion 442 having inclined teeth 442a may allow the arm head 420 to slide on the pivot shaft 440, under the application of impact force greater than a predefined force applied on the arm head 420. The angle of inclination A may be determined based on the predefined impact force that needs to disengage/break the engagement between the teeth 442a and the inner surface of the through hole 422. It is to be noted that the knurled portion 442 of this aspect may be provided on the pivot shaft 440 of all embodiments of the connection assembly 410 described above.

The invention shall not, however, be limited to the means and configurations described and illustrated herein, and shall also extend to any equivalent means or configuration described and illustrated herein, and to any technical combination operating such means.

### LIST OF REFERENCE SIGNS

| | |
|---|---|
| 10 | Wiper system |
| 20 | Wiper motor |
| 30 | linkages |
| 100 | Wiper blade |
| 200 | Wiper arm |
| 200a | First end of wiper arm |
| 200b | Second end of wiper arm |
| 300 | Drive lever |
| 400 | Pivot assembly |
| 410 | Connection assembly |
| 420 | Arm head |
| 420a | Upper side of arm head |
| 420b | Lower side of arm head |
| 422 | Through hole |
| 424 | Breakable flange |
| 440 | Pivot shaft |
| 441 | Blind hole |
| 440a | Upper end of the pivot shaft |
| 440b | Lower end of the pivot shaft |
| 440c | Main body of the pivot shaft |
| 442 | Knurled portion |
| 442a | Teeth |
| 444 | Step |
| 446 | Circular groove |
| 446a | Lower edge of the circular groove |
| 447 | C-clip |
| 448 | Supporting washer |
| 448a | Retaining washer |
| 460 | Pivot housing |
| 460a | Upper end of the pivot housing |
| 460b | Lower end of the pivot housing |
| 480 | Locking means |
| 480a | Nut |
| 480b | Screw |
| 481b | Collar/ washer |
| 500 | Wiper assembly |

## Claims

1. A connection assembly (410) for connecting a wiper arm to a pivot shaft of a pivot assembly, the connection assembly (410) comprising:
a pivot shaft (440) including an upper end (440a), a lower end (440b), and a main body (440c) extending between the upper end (440a) and the lower end (440b);
an arm head (420) configured to be connected to a first end (200a) of a wiper arm (200), the arm head (420) being mounted to the pivot shaft (440); and
a locking means (480) provided on the pivot shaft (440) to restrict movement of the arm head (420) with respect to the pivot shaft (440), in an upward direction along the longitudinal axis P of the pivot shaft (440),
wherein the pivot shaft (440) includes a knurled portion (442) configured to be received in a through hole (422) formed in the arm head (420), the knurled portion (442) engages with the through hole 422 to form a torque transmitting joint between the pivot shaft (440) and the arm head (420), and
wherein the torque transmitting joint is configured to break under an impact force or forces acting on the arm head (420) exceeding a predefined force threshold.

2. The connection assembly (410) according to claim 1, wherein at least the knurled portion (442) of the pivot shaft (440) is cylindrical.

3. The connection assembly (410) according to any of preceding claims, wherein the knurled portion (442) includes a plurality of teeth extending parallel to the longitudinal axis of the pivot shaft (440).

4. The connection assembly (410) according to claim 1 or claim 2, wherein the knurled portion (442) includes a plurality of teeth extending in a direction inclined at an angle with the longitudinal axis of the pivot shaft (440).

5. The connection assembly (410) according to any of preceding claims, wherein the locking means (480) includes a nut (480a) threadedly secured to the pivot shaft (440) near the upper end (440a) of the shaft (440).

6. The connection assembly (410) according to any one of claims 1 to 4, wherein the locking means (480) includes a screw (480b) threadedly secured in a blind hole (441) extending from the upper end (440a) of the pivot shaft (440).

7. The connection assembly (410) according to any one of preceding claims, wherein the arm head (420) includes a breakable flange (424) formed in the through hole (422), the breakable flange (424) being configured to rest on the upper end (440a) of the pivot shaft (440) or on a step (444) formed in the pivot shaft (440).

8. The connection assembly (410) according to any of preceding claims, wherein the pivot shaft (440) includes a circular groove (446) having tapered lower edge (446a), the circular groove (446) being configured to receive a C-clip (447) to support the arm head (420).

9. The connection assembly (410) according to claim 8, including a supporting washer (448) provided on the pivot shaft (440) between the C-clip (447) and the arm head (420).

10. The connection assembly (410) according to any one of claims 1 to 6, wherein the knurled portion (442) of the pivot shaft (440) has a diameter greater than the diameter of the non-knurled portion of the pivot shaft (440).

11. The connection assembly (410) according to claim 10, wherein the knurled portion (442) of the pivot shaft (440) is formed as a separate component secured to the main body (440c) of the pivot shaft (440).

12. The connection assembly (410) according to claim 11, including a retaining washer (448a) along with a supporting washer (448), provided on the pivot shaft (440) to support the arm head (420).

13. A pivot assembly (400), comprising:
a pivot housing (460) fixedly mounted on a vehicle structure, the pivot housing (460) including a through bore to rotatably support at least a portion of the pivot shaft (440) of the connection assembly (410) according to any one of preceding claims.

14. A wiper assembly (500) for a motor vehicle, the wiper assembly (500) comprising:
a wiper blade (100) attached to a second end (200b) of the wiper arm (200); and
the pivot assembly (400) according to claim 13, the pivot assembly (400) being configured to connect the first end (200a) of the wiper arm (200) to a drive lever (300).

15. A wiper system (10) for a motor vehicle, the wiper system (10) comprising:
at least one wiper assembly (500) according to claim 14; and
a wiper motor (20) configured to drive the drive lever (300) through linkages (30), to operate the at least one wiper assembly (500).
